(19) Europäisches Patentamt
European Patent Office
Office européen des brevets

(11) **EP 1 577 565 B1**

(12) **EUROPÄISCHE PATENTSCHRIFT**

(45) Veröffentlichungstag und Bekanntmachung des Hinweises auf die Patenterteilung:
**31.10.2012  Patentblatt 2012/44**

(51) Int Cl.:
*F15B 13/044* (2006.01)    *F16K 17/06* (2006.01)
*F16K 31/06* (2006.01)

(21) Anmeldenummer: **05002345.6**

(22) Anmeldetag: **04.02.2005**

(54) **Ventil, insbesondere Druckregelventil**

Pressure control valve

Soupape de régulation de pression

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.03.2004  DE 102004012711**

(43) Veröffentlichungstag der Anmeldung:
**21.09.2005  Patentblatt 2005/38**

(73) Patentinhaber: **Hydac Electronic GmbH**
**66280 Sulzbach/Saar (DE)**

(72) Erfinder:
• **Kattler, Frank**
  **66346 Püttlingen (DE)**

• **Casimir, Michael**
  **66128 Saarbrücken (DE)**
• **Daniel, Thomas**
  **66822 Lebach (DE)**

(74) Vertreter: **Bartels & Partner**
**Lange Strasse 51**
**70174 Stuttgart (DE)**

(56) Entgegenhaltungen:
**DE-A1- 19 949 234    US-A- 2 672 882**
**US-A- 5 509 448**

**Beschreibung**

Die Erfindung betrifft ein Ventil, insbesondere Druckregelventil, mit einem mindestens einen Pumpenanschluß und einen ersten sowie einen zweiten Tankanschluß aufweisenden Ventilgehäuse, in dem ein insbesondere von einem Magnetanker ansteuerbarer Ventilkolben geführt ist und das mit einer hydraulischen Dämpfungseinrichtung mit einem Dämpfungsraum versehen ist, wobei mittels einer Drossel das Innere des Dämpfungsraumes mit dem ersten Tankanschluß verbindbar ist, wobei mit zunehmendem Verfahrweg des Ventilkolbens in Richtung des zweiten Tankanschlusses der freie Querschnitt der Drossel im Ventilkolben sich verringert, wobei die Begrenzungswand einer Bohrung für die innerhalb des Ventilkolbens verlaufenden Teile der Drossel eine Regelkante der Drossel ausbildet.

Bekannt sind Proportional-Druckbegrenzungsventile, die unter anderem Steuer- oder Regelventile für ölhydraulische Anlagen bilden, deren Einlaßdruck durch Öffnen der Ablaßöffnung zum Tank gegen eine Gegenkraft gesteuert wird, die aus einem Magnet-Feder-System besteht. Die Vorgabe des zu steuernden Druckes erfolgt hierbei elektrisch mit einem Stromsignal, das von einer entsprechenden Ansteuerelektronik geliefert wird und die auf den Betätigungsmagneten wirkt.

Liegt die hydraulische Druckkraft unterhalb der eingestellten Federkraft, ist das Ventil geschlossen. Steigt die hydraulische Druckkraft über einen vor gebbaren Schwellenwert der Federkraft, hebt der Hauptkolben mit seinem Schließkegel vom durch das Ventilgehäuse gebildeten Ventilsitz ab und verbindet den Druckanschluß mit dem Tankanschluß. Dabei wird der Anlagendruck auf den mit dem Magnetsystem und der Feder eingestellten Wert begrenzt. Im Falle einer Unterbrechung des Steuerstromes zur Magnetspule wird die Feder entspannt und der Systemdruck fällt auf den minimal einstellbaren Druck ab.

Solche Proportional-Druckbegrenzungsventile haben eine Vielzahl von Anwendungsfällen, wobei sie in ölhydraulischen Anlagen insbesondere zur automatischen oder manuellen Anpassung des Anlagendruckes auf die erforderlichen Werte dienen oder der gezielten Beeinflussung des Druckauf- und -abbaues. Des weiteren können sie zur Steuerung von Einstelleinrichtungen an Pumpen und in Pumpenregelkreisen eingesetzt werden.

Dahingehende herkömmliche Proportional-Druckbegrenzungsventile weisen insbesondere bei dünnflüssigen Fluiden eine schlechte Stabilität auf, d.h. sie beginnen zu schwingen, was insbesondere schädlich ist, wenn die bekannten Ventile Sonderfunktionen erfüllen sollen, beispielsweise in Kraftfahrzeugservolenkungen od. dgl..

Die DE-OS-18 03 018 offenbart ein Druckbegrenzungsventil, bei dem der als Hauptkolben ausgebildete Ventilkörper mit seinem Abschlußteil durch die Kraft einer Feder definiert gegen einen Ventilsitz gedrückt, der den pumpenseitigen Fluidanschluß begrenzt. Überschreitet die durch das Fluid auf der Pumpenseite auf das Abschlußteil des Hauptkolbens ausgeübte Kraft die vorgegebene Federkraft, so hebt sich das Abschlußteil von dem Ventilsitz ab und gibt den Fluidstrom zum Tankanschluß frei. Um in diesem geöffneten Zustand Schwingungen des Druckbegrenzungsventils zu vermeiden, bildet der Hauptkolben auf seiner rückwärtigen, dem pumpenseitigen Anschluß abgekehrten Seite zusammen mit dem Ventilgehäuse einen Dämpfungsdruckraum aus. Bei der Bewegung des Hauptkolbens, die den Fluidstrom vom Pumpenanschluß zum Tankanschluß freigibt, dringt der Hauptkolben nach Art eines Verdrängerkolbens in den Dämpfungsdruckraum ein. Das dabei verdrängte Fluidvolumen strömt durch den als Drossel wirkenden ringförmigen Spalt zwischen Hauptkolben und Ventilgehäuse entgegen der Bewegungsrichtung des Hauptkolbens aus dem Dämpfungsdruckraum heraus und wird über einen weiteren Tankanschluß abgeführt. Bei einer Bewegung des Hauptkolbens in Richtung Schließstellung wird in umgekehrter Weise aus dem weiteren Tankanschluß Fluid durch den Drosselspalt hindurch in den Dämpfungsdruckraum eingebracht. Die Stärke der Dämpfung variiert mit der Stellung des Ventilkörpers, indem bei größerer Eintauchtiefe des Ventilkörpers in den Dämpfungsdruckraum die Größe der als Strömungswiderstand wirksamen Fläche im Drosselspalt zunimmt. Der freie Querschnitt des Drosselspaltes zwischen Hauptkolben und Ventilgehäuse bleibt dabei aber konstant. In Weiterbildung dieser Lösung kann die Stärke der Dämpfung von der Stellung des Hauptkolbens unabhängig gemacht werden, indem der Durchmesser des hinteren Teils des Dämpfungsdruckraumes erweitert und damit die Länge der in Zusammenwirkung mit dem Hauptkolben den Drosselspalt bildenden Wand des Ventilgehäuses begrenzt wird. Das bekannte Ventil weist gleichfalls insbesondere bei dünnflüssigen Fluiden eine schlechte Stabilität, wie vorstehend beschrieben, auf.

Bei einem gattungsgemäßen Ventil nach der DE 199 49 234 A1 sind die bisher beschriebenen Ventils dahingehend weiter verbessert, dass sie in ihrem Verhalten auch bei dünnflüssigen Fluiden stabiler sind und über eine bessere Dynamik verfügen, so dass sie auch für Sondereinsatzfälle, wie im Kraftfahrzeugbereich, sehr gut geeignet sind. Hierfür weist das weitere bekannte Ventil einen dritten Tankanschluß innerhalb des Ventilgehäuses auf, das in den Dämpfungsraum mündet, wobei die Drossel abhängig von der Position des Haupt- oder Ventilkolbens in ihrem freien Querschnitt verändert ist, wodurch sich eine in ihrem Querschnitt vom Ventilhub abhängige Verbindung des Dämpfungsraumes zum Tankdruckniveau ergibt. Dergestalt erlaubt der Dämpfungsraum die Dämpfung der möglicherweise in Regelstellung auftretenden Schwingungen, was zu einer besseren Stabilität des Ventils führt. Infolge des sehr großen Querschnittes der Verbindung des Dämpfungsraumes zum Tankdruckniveau bei offenem Ventil ist die Dämpfung quasi unwirksam, was zu einer besseren Dynamik des Ventils führt. Durch den mittels des dritten im Ventilgehäuse angeordneten Tankanschlusses gleichzeitig realisierten konstanten Dämpfungsanteil ist eine sehr feinfühlige Abstimmung des Druckregelventils auf die gegebenen Verhältnisse möglich und damit auch eine Optimierung des dynamischen Verhaltens. Mithin wird über den weiteren zweiten Tankanschluß eine Art variabler Dämpfungsanteil realisiert und über den zusätzlichen genannten dritten Tankanschluß eine Art konstanter Dämpfungsanteil.

Aufgrund der Vielzahl an Tankanschlüssen, die in Reihe hintereinander angeordnet sind - insgesamt mindestens drei -, baut die bekannte Lösung aber insbesondere in axialer Einbaulänge groß auf, was bei beengten Einbauverhältnissen nachteilig ist. Des weiteren sind im Hinblick auf die Vielzahl der Tankanschlüsse die Strömungswege für das Fluid verlängert, was zu Lasten der Dynamik des bekannten Ventils geht.

Die US 2 672 882 offenbart ein Sicherheitsventil mit einem Gussgehäuse. Das Sicherheitsventil weist einen Pumpenanschluss und zwei Tankanschlüsse auf. Der zweite Tankanschluss ist einem Innenraum zugeordnet, der durch Bohrungen im Ventilkolben mit dem ersten Tankanschluss verbunden ist. Das Ventil öffnet, sobald der Fluiddruck am Pumpenanschluss einen einstellbaren Grenzwert einer entgegenwirkenden Feder übersteigt. In dem Maße, in dem der Ventilkolben von seinem Ventilsitz abhebt, verschließen sich die Bohrungen im Ventilkolben, so dass weniger Fluid in den Innenraum eindringen kann.

Aus der US 5 509 448 A geht ein Steuerungsventil mit eingebautem Druckspeicher hervor. Das Ventilgehäuse weist einen Pumpenanschluss und vier Tankanschlüsse auf. Ein im Ventilgehäuse axial verlagerbarer Ventilkolben ist mit einem Magnetsystem ansteuerbar. Der Ventilkolben ist von einer Bohrung durchsetzt, die mit einer Ausnehmung für einen Tankanschluss im Ventilgehäuse zusammenwirkt.

Ausgehend von diesem Stand der Technik liegt daher der Erfindung die Aufgabe zugrunde, die bekannten Ventile dahingehend unter Beibehalten ihrer Vorteile weiter zu verbessern, dass sie kleinere Einbaumaße aufweisen und dass sie über eine noch bessere Dynamik verfügen. Eine dahingehende Aufgabe löst ein Ventil mit den Merkmalen des Patentanspruches 1 in seiner Gesamtheit.

Dadurch, dass Teile der Drosselstelle den Ventilkolben in der Art mindestens einer Bohrung durchgreifen, benötigt das erfindungsgemäße Ventil nicht mehr drei Tankanschlüsse, wie im Stand der Technik (DE 199 49 234 A1) beschrieben, sondern nunmehr sind nur noch ausschließlich zwei Tankanschlüsse notwendig, die das Ventilgehäuse durchgreifen, um zu dem gewünschten Stabilitäts- und Dynamikerfolg zu gelangen, bei gleichzeitig reduzierter Baugröße gegenüber den bekannten Lösungen. Da das erfindungsgemäße Ventil mit nur zwei Tankanschlüssen auskommt, ist insbesondere seine axiale Einbaulänge reduziert, so dass das Ventil auch bei beengten Einbauverhältnissen, wie sie üblicherweise im Kraftfahrzeugbereich vorliegen, optimal einsetzbar ist. Des weiteren sind die freien Fluidwege dergestalt über die beiden ausschließlich realisierten Tankanschlüsse reduziert, was das Ansprech- und Dynamikverhalten des Ventils verbessert. Auch ist dergestalt der Herstellaufwand reduziert und es hat sich gezeigt, dass durch die in den Ventilkolben eingebrachte Drossel das Regelverhalten verbessert ist gegenüber der Lösung, bei der der stirnseitige Teil des Ventilkolbens mit einem dritten Tankanschluß die variable Drossel bildet.

Weitere vorteilhafte Ausführungsformen des erfindungsgemäßen Ventils sind Gegenstand der weiteren Unteransprüche.

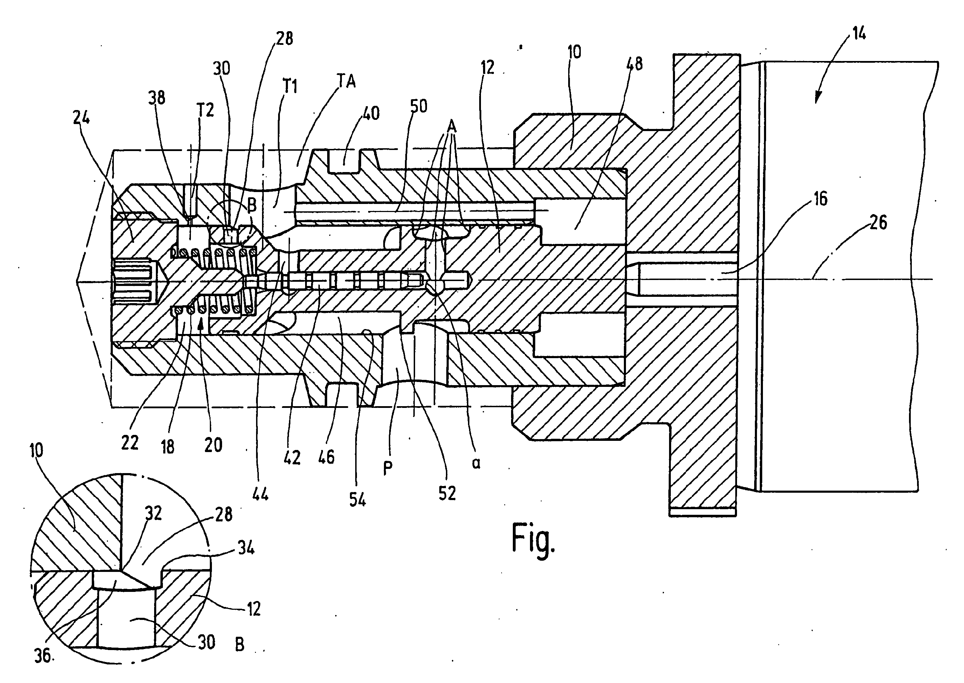

Im folgenden wird das erfindungsgemäße Ventil anhand eines Ausführungsbeispiels nach der Zeichnung näher erläutert. Dabei zeigt die einzige Figur in prinzipieller und nicht maßstäblicher Darstellung, teilweise in Ansicht, teilweise im Schnitt, eine Längsdarstellung durch das erfindungsgemäße Ventil, insbesondere Druckregelventil, wobei in Blickrichtung auf die Figur links unten in vergrößerter Darstellung und mit B bezeichnet, der kreisförmige Ausschnitt B gemäß der Längsdarstellung wiedergegeben ist.

Das in der Figur gezeigte Ventil weist ein als Ganzes mit 10 bezeichnetes Ventilgehäuse auf in der Art einer Einschraubpatrone, so dass sich das Ventil über ein Außengewinde in eine Ventilaufnahme mit Fluidführungen (nicht dargestellt) einschrauben läßt. Innerhalb des Ventilgehäuses 10 ist längsverfahrbar ein Haupt- oder Ventilkolben 12 angeordnet. Zur Betätigung des Ventilkolbens 12 dient ein als Ganzes mit 14 bezeichnetes Magnetsystem, das in der Figur nur teilweise dargestellt ist. Wird das Magnetsystem 14 von außen bestromt, wird eine nicht näher dargestellte Magnetspule erregt, die einen nicht näher dargestellten Magnetanker betätigt, der wiederum über einen Betätigungsstößel 16 auf den Haupt- oder Ventilkolben 12 entsprechend einwirkt. Der dahingehende Aufbau eines Magnetbetätigungssystems ist üblich, so dass an dieser Stelle hierauf nicht mehr näher eingegangen wird.

Das Magnetsystem 14 des Ventils führt je nach Höhe des Steuerstromes, der über eine übliche Anschlußstelle zuführbar ist, einen Hub gegen die Kraft eines Federspeichers in Form der Druckfeder 18 aus einschließlich der Kraft aufgrund der kraftwirksamen Fläche eines Druckmeldekolbens 42. Der Anlagendruck am Anschluß P des Ventils kann dabei über eine hydraulische Konstantpumpe od. dgl. aufgebracht sein. Des weiteren weist das erfindungsgemäße Ventil eine als Ganzes mit 20 bezeichnete hydraulische Dämpfungseinrichtung auf. Die hydraulische Dämpfungseinrichtung 20 des erfindungsgemäßen Ventils ist mit einem mit Fluid befüllten Dämpfungsraum 22 versehen, der nach außen zur Umgebung hin von einem Verschlußstopfen 24 begrenzt ist, der an dem einen freien Ende des Ventilgehäuses 10 in dieses einschraubbar und festlegbar ist. Auf der gegenüberliegenden Seite ist der Dämpfungsraum 22 von dem freien Ende des Ventilkolbens 12 begrenzt und ansonsten von der Innenwand des Ventilgehäuses 10. Des weiteren ist das Ventilgehäuse 10 von einem ersten Tankanschluß T1 durchgriffen sowie von einem weiteren Tankanschluß T2. Beide Tankanschlüsse T1,T2 münden mit ihrem freien nach außen hin weisenden Ende in einen gemeinsamen Tankanschlußraum TA. Die einzelnen Tankanschlüsse T1,T2 können aus mehreren Bohrungen bestehen, die vorzugsweise zur Längsachse 26 des Ventils diametral einander gegenüberliegend das Ventilgehäuse 10 durchgreifen. Ferner ist der Bohrungsdurchmesser des Tankanschlusses T1 größer als der des Tankanschlusses T2.

In Richtung des vorderen Endes des Ventilkolbens 12 weist dieser Teile einer Drossel 28 auf, die den Ventilkolben 12 in der Art mindestens einer Bohrung 30 durchgreift. Die dahingehende Drossel ist in der Vergrößerung B entsprechend dargestellt. Wie insbesondere die Vergrößerung B zeigt, ist die Drosselstelle 28 durch zwei umlaufende Regelkanten 32,34 gebildet, wobei die Regelkante 32 dem Ventilgehäuse 10 zuordenbar ist und die Regelkante 34 dem Ventilkolben 12. Zur Bildung der dahingehenden Regelkante 34 ist der Ventilkolben 12 außenumfangsseitig mit einer im Querschnitt rechteckförmigen Ringnut 36 versehen, in die die jeweilige Bohrung 30 mündet. Je nachdem, welche Position der Haupt- oder Ventilkolben 12 innerhalb des Ventilgehäuses 10 einnimmt, verändert sich der freie variierbare Querschnitt für die Drossel 28. Ist beispielsweise in Blickrichtung auf die Figur gesehen der Ventilkolben 12 ganz rechts, ist die Drosselfunktion der Drossel 28 im wesentlichen aufgehoben, da sich die freien Öffnungsquerschnitte von Drosselbohrung 30 und der jeweiligen Bohrung von Tankanschluß T1 fluidführend überdecken. Ist gemäß der Darstellung nach der Teil-Figur B die Teilöffnung der Bohrung 30 durch den Innenumfang des Ventilgehäuses 10 vorgegeben, befindet sich das Ventil in einer seiner entsprechenden Drosselstellungen. In Blickrichtung auf die Figur gesehen ganz links eingefahren, wäre dann die Bohrung 30 mit Ringnut 36 vollständig von dem inneren Umfang des Ventilgehäuses 10 abgedeckt, so dass insoweit die Drossel 28 verschlossen ist.

Der weitere Tankanschluß T2 ist gleichfalls mit einer Drosselstelle 38 versehen, deren freier Öffnungsquerschnitt jedoch festgelegt und nicht im Betrieb des Ventils veränderbar ist. Aufgrund des zweiten Tankanschlusses T2 läßt sich in den Dämpfungsraum 22 unter Tankdruck stehendes Fluid nachfördern, sofern in Blickrichtung auf die Figur gesehen der Hauptkolben 12 entgegen der Magnetkraft des Magnetsystems 14 sich in seine öffnende Stellung bewegt. Findet für einen Dämpfungsvorgang eine Bewegung des Haupt- oder Ventilkolbens 12 in der entgegengesetzten Richtung statt, ist es möglich, überflüssiges Dämpfungsfluid im Dämpfungsraum 22 über die Drosselstelle 28 im Ventilkolben 12 selbst in den ersten Tankanschluß T1 zu verbringen, wobei im Hinblick auf den größeren freien Querschnitt der variablen Drossel 28 hier eine Verdrängung eher erfolgt als über die weitere Drosselstelle 38 mit kleinerem Öffnungsquerschnitt bei dem zweiten Tankanschluß T2. Bei der dahingehenden Ausgestaltung läßt sich mithin eine sehr weitgehende Feinstabstimmung bei der angesprochenen hydrodynamischen Dämpfung erreichen. Dabei sind die freien Öffnungsquerschnitte von Pumpenanschluß P und Tankanschluß T1 im wesentlichen gleich dimensioniert und die freien Querschnitte des Tankanschlusses T2 sind kleiner als der Tankanschluß T1.

Der bereits angesprochene Tankanschlußraum TA wird durch den Zwischenraum gebildet zwischen dem strichliniert dargestellten Ventileinbauraum und dem eigentlichen Ventil, das im vorliegenden Ausführungsbeispiel als Einschraubpatrone ausgebildet ist. Zum Festlegen des Ventils an einer nicht näher dargestellten Ventilaufnahme kann ein Außengewinde dienen aber auch am Ventilkörper angeordnete Flanschteile, die dann dem Durchgriff von Festlegemitteln, wie Schrauben od. dgl., dienen. Des weiteren verbreitert sich das Ventilgehäuse 10 gemäß der gezeigten Ausführungsform stufenweise in Richtung des Magnetsystems 14 und ist mit einer Ausnehmung 40 versehen zwecks Aufnahme von nicht näher dargestellten Dichtmitteln, die die Abdichtung des Ventilgehäuses 10 gegenüber der Ventilaufnahme gewährleisten.

Mittig innerhalb des zylindrischen Ventilkolbens 12 ist ein sog. Druckmeldekolben 42 geführt, der sich mit seinem einen freien Ende an einer stabartigen Verlängerung des Verschlußstopfens 24 abstützt und mit seinem anderen freien Ende über den Pumpenanschluß P mit Fluiddruck beaufschlagbar ist. Eine weitergehende Abdichtung ist neben dem Ringspalt nicht vorgesehen, so dass ein Leckagestrom möglich ist zwischen dem Pumpenanschluß P und dem ersten Tankanschluß T1 über den Verbindungsspalt zwischen dem Inneren des Hauptkolbens 12 und dem Außenumfang des Druckmeldekolbens 42, sofern dieser längsverfahrbar innerhalb des Ventilkolbens 12 in den genannten Bereich eingreift. Damit der Leckagestrom über den Pumpenanschluß P in den Tankanschluß T1 eintreten kann, ist im Ventilkolben 12 ein Querkanal 44 angeordnet, in den der Druckmeldekolben 42 mit seinen Ringnuten entsprechend einmündet.

Zwischen dem Ventilgehäuse 10 und insbesondere zwischen dem Verschlußstopfen 24 und dem Ventilkolben 12 stützt sich ein Federspeicherelement in Form der Druckfeder 18 ab, die auf den Ventilkolben 12 in Richtung seiner bereits angesprochenen Öffnungsstellung eine Kraft ausübt. Die Tankanschlüsse T1 und T2 bestehen, wie bereits dargelegt, aus mehreren, sich außenumfangsseitig längs des Ventilgehäuses 10 in jeweils gleichen Ebenen versetzt liegenden und erstreckenden Anschlußbohrungen. Des weiteren erstreckt sich für eine fluidführende Verbindung zwischen dem Pumpenanschluß P und dem ersten Tankanschluß T1 entlang des Ventilkolbens 12 mindestens ein Verbindungskanal 46, der auch aus einer umlaufenden Ringnut gebildet sein kann. Ferner besteht innerhalb des Ventilgehäuses 10 innerhalb der Wandung desselben zwischen dem ersten Tankanschluß T1 und einem Betätigungsraum 48 eine Druckausgleichsverbindung 50, um die freie Bewegbarkeit des Ventil- oder Hauptkolbens 12 in Abhängigkeit von seiner jeweiligen Regelstellung zu erlauben.

Bei der erfindungsgemäßen Ausführungsform steuert der Ventilkolben 12 über eine radial vorstehende Steuerkante 52 in Verbindung mit der zylindrischen zugeordneten Innenumfangsfläche 54 des Ventilkörpers 10 den Hauptfluidstrom zwischen Pumpenanschluß P und erstem Tankanschluß T1, der über den Verbindungskanal 46 geführt wird.

Sofern das Magnetsystem 14 bestromt ist, übt dieses auf den Ventilkolben 12 eine Schließkraft in dem Sinne aus, dass sich der freie Spalt zwischen der Steuerkante 52 und der Innenumfangsfläche 54 verringert. Dem entgegen wirkt die Druckfeder 18 mit ihrer Federkraft, die aus dem freien Federweg s und der vorgebbaren Federkonstante c gebildet ist. Des weiteren wirkt über den Pumpenanschluß P über die Gesamtfläche A ein Öffnungsdruck entgegen der Magnetkraft. In der anderen Richtung, also in Richtung der Schließstellung, wirkt des weiteren am Ventilkolben 12 bedingt durch den Druck p am Pumpenanschluß P eine Schließkraft, wobei die freie Fläche a des Druckmeldekolbens 42 von der Gesamtfläche A abzuziehen ist, so dass sich für einen ausgeglichenen Kräftezustand für die Magnetkraft die folgende Formel ergibt:

$$F_{Magnet} = p \times a + c \times s$$

Bei einer ganz rechten Position des Ventilkolbens 12 ist sein Hub gleich 0 und das Magnetsystem 14 gar nicht oder derart bestromt, dass die Druckfeder 18 den Ventilkolben 16 in Richtung seiner Öffnungsstellung aufsteuert. Dabei ist eine weitgehende fluidführende Verbindung vom Pumpenanschluß P zum ersten Tankanschluß T1 über den Verbindungskanal 46 im Hauptkolben 12 gegeben. Wird nun das Magnetsystem 14 angesteuert, wird über den Magnetanker der Betätigungsstößel 16 betätigt und der Ventilkolben 12 bewegt sich in Richtung seiner Schließstellung gemäß der Darstellung nach der Figur, also in Blickrichtung auf die Figur gesehen von rechts nach links. Damit ist dann der Pumpen- oder Versorgungsstrom von P nach T1 weitgehend abgesperrt und die Hauptfluidmenge kann an eine Verbraucherstelle (nicht dargestellt), beispielsweise in Form von Aktuatoren, einer Servolenkung od. dgl., weitergeleitet werden. Da zwischen der Steuerkante 52 und der Innenumfangsfläche 54 dann nur noch eine geringe Fluidmenge durchströmen kann, die gegebenenfalls auch noch in Abhängigkeit des Fluidmediums sehr dünnflüssig ist, entstehen im Bereich der Steuerkante 52 Turbulenzen oder Wirbel, die die Gefahr beinhalten, dass es ungewollt zu Schwingungen kommt, was den hydraulischen Versorgungskreislauf wesentlich beeinträchtigen kann.

Mit dem vorliegenden erfindungsgemäßen Ventil werden nun über die hydraulische Dämpfungseinrichtung 20 mit Dämpfungsraum 22 sowie Drossel 28 die dahingehenden Einschwingvorgänge in beiden Richtungen, also Öffnen und Schließen, gedämpft, wobei wahlweise in den Dämpfungsraum 22 Fluid über T2 und T1 nachgeführt wird, oder nach T2 und T1 verdrängt wird, so dass dem dahingehenden Einschwingverhalten des Ventilkolbens 12 wirksam begegnet ist und der vorgesehene Fluidspalt für eine vorgebbare Fluidmenge zwischen Steuerkante 52 und Innenumfangsfläche 54 im wesentlichen gehalten wird. Dies gilt auch für den Fall, dass in einer weitest zugesteuerten Regelstellung die Drossel 28 über die Regelkanten 34 und 32 nahezu geschlossen ist. Bei den dahingehenden Einregelvorgängen ist dann über den Tankanschluß T1 immer noch der variable Dämpfungsanteil realisiert und über den Anschluß T2 ein konstanter Dämpfungsanteil für den Dämpfungsvorgang über die Drosselstelle 38 gewährleistet.

Bei einer noch weitergehenden Regelstellung, bei der die Drossel 28 durch den Innenumfang des Ventilgehäuses 10 vollständig geschlossen ist, ist auch der Pumpenanschluß P vom Tankanschluß T1 getrennt. Bei der dahingehenden Regel- oder Schaltstellung des Ventils läßt sich unter Umständen unterstützt durch eine Bestromung des Magnetsystems 14 die Pumpenfluidmenge von sehr kleinen Werten auf sehr große Volumina, die an einen Verbraucher abgebbar sind, hochschalten.

Mit dem erfindungsgemäßen Ventil ist ein Proportional-Druckbegrenzungsventil realisiert, wobei die Dämpfung des Ventils abhängig vom Ventilhub ist. Realisiert wird dies letztendlich durch eine im Ventilkolben 12 angeordnete Drosselstelle oder Drosselbohrung 28,30, die über den Arbeitshub des Kolbens 12 vom freien Durchflußquerschnitt her veränderbar ist und dergestalt den variablen Dämpfungsanteil wiedergibt. Durch die weitere Drosselstelle 38 im zweiten Tankanschluß T2 ist eine vom Ventilhub unabhängige Verbindung des Dämpfungsraumes 22 zum Tankdruckniveau realisiert, was den konstanten Dämpfungsanteil des Ventils wiedergibt. Eine Leckagekompensation kann dabei innerhalb des Ventilkolbens 12 über den Querkanal 44 erfolgen. Mit der beschriebenen erfindungsgemäßen Ventillösung ist mithin eine hydrodynamische, leckagekompensierte, über den Ventilhub variable Dämpfung für ein Ventil erreicht, wobei hierfür in Längsrichtung 26 des Ventils nur zwei Tankanschlüsse T1,T2 notwendig sind und eine in den Ventilkolben eingebrachte Drossel 28. Hierdurch sind die freien Fluidwege innerhalb des Ventils verkürzt, was das Einschwing- und Dynamikverhalten des Ventils deutlich verbessert. Des weiteren baut die erfindungsgemäße Lösung insbesondere in der Längsachse 26 des Ventils klein auf, so dass insbesondere das Ventil im Kraftfahrzeugbereich, wo grundsätzlich beengte Einbauverhältnisse vorhanden sind, sehr gut einsetzbar ist.

## Patentansprüche

1. Ventil, insbesondere Druckregelventil, mit einem mindestens einen Pumpenanschluß (P) und einen ersten sowie einen zweiten Tankanschluß (T1,T2) aufweisenden Ventilgehäuse (10), in dem ein insbesondere von einem Magnetsystem (14) ansteuerbarer Ventilkolben (12) geführt ist und das mit einer hydraulischen Dämpfungseinrichtung (20) mit einem Dämpfungsraum (22) versehen ist, wobei mittels einer Drossel (28) das Innere des Dämpfungsraumes (22) mit dem ersten Tankanschluß (T1) verbindbar ist, wobei Teile der Drossel (28) den Ventilkolben (12) in der Art mindestens einer Bohrung durchgreifen, wobei mit zunehmendem Verfahrweg des Ventilkolbens (12) in Richtung des zweiten Tankanschlusses (T2) der freie Querschnitt der Drossel (28) im Ventilkolben (12) sich verringert, wobei die Begrenzungswand einer Bohrung für die innerhalb des Ventilkolbens (12) verlaufenden Teile (30) der Drossel (28) eine Regelkante (32) der Drossel (28) ausbildet, **dadurch gekennzeichnet, dass** die Begrenzungswand einer Bohrung für den ersten Tankanschluß (T1) eine weitere Regelkante (34) der Drossel (28) ausbildet.

2. Ventil nach Anspruch 1, **dadurch gekennzeichnet, dass** der Ventilkolben (12) außenumfangsseitig mit einer Ringnut (36) versehen ist, in die die Teile der Drossel (28) insbesondere in der Art der jeweiligen Bohrung (30) münden, und dass die dem ersten Tankanschluß (T1) zugewandte Seite der Ringnut (36) eine der Regelkanten (34) ist.

3. Ventil nach einem der Ansprüche 1 bis 2, **dadurch gekennzeichnet, dass** die eine Drossel (28) über einen veränderlichen Querschnitt verfügt und dass eine zweite Drossel (38) im zweiten Tankanschluß (T2) mit fest vorgegebenem Querschnitt angeordnet ist.

4. Ventil nach einem der Ansprüche 1 bis 3, **dadurch gekennzeichnet, dass** alle Tankanschlüsse (T1,T2) in einen gemeinsamen Tankanschluß (TA) münden.

5. Ventil nach einem der Ansprüche 1 bis 4, **dadurch gekennzeichnet, dass** innerhalb des Ventilkolbens (12) ein Druckmeldekolben (42) geführt ist, der sich mit seinem einen freien Ende am Ventilgehäuse (10) abstützt und mit seinem anderen freien Ende über den Pumpenanschluß (P) mit Fluiddruck beaufschlagbar ist.

6. Ventil nach einem der Ansprüche 1 bis 5, **dadurch gekennzeichnet, dass** zwischen dem Ventilgehäuse (10) und dem Ventilkolben (12) ein in Richtung einer voll geöffneten Stellung der ersten Drossel (28) wirkendes Kraftspeicherelement, insbesondere in Form einer Druckfeder (18), angeordnet ist.

7. Ventil nach einem der Ansprüche 1 bis 6, **dadurch gekennzeichnet, dass** für eine fluidführende Verbindung zwischen dem Pumpenanschluß (P) und dem ersten Tankanschluß (T1) entlang des Ventilkolbens (12) sich mindestens ein Verbindungskanal (46) erstreckt.

8. Ventil nach einem der Ansprüche 1 bis 7, **dadurch gekennzeichnet, dass** innerhalb des Ventilgehäuses (10) zwischen dem ersten Tankanschluß (T1) und einem Betätigungsraum (48) für den Ventilkolben (12) eine Druckausgleichsverbindung (50) besteht.

## Claims

1. A valve, in particular a pressure regulating valve, comprising a valve housing (10) having at least one pump connection (P) and a first and a second tank connection (T1, T2) in which a valve piston (12) that can be actuated in particular by a magnet system (14) is operated and that is provided with a hydraulic damping device (20) with a damping chamber (22), the interior of the damping chamber (22) being connectable to the first tank connection (T1) by means of a restrictor (28), parts of the restrictor (28) passing through the valve piston (12) in the manner of at least one bore hole, as the path of travel of the valve piston (12) increases in the direction of the second tank connection (T2) the free cross-section of the throttle (28) being reduced in the valve piston (12), the limitation wall of a bore hole for the parts (30) of the restrictor (28) extending within the valve piston (12) forming a control edge (32) of the restrictor (28), **characterised in that** the limitation wall of a bore hole for the first tank connection (T1) forms a further control edge (34) of the restrictor (28).

2. The valve according to Claim 1, **characterised in that** the valve piston (12) is provided on the outer peripheral side with an annular groove (36) into which the parts of the restrictor (28), in particular in the manner of the respective bore hole (30), discharge, and that the side of the annular groove (36) facing towards the first tank connection (T1) is one of the control edges (34).

3. The valve according to any of Claims 1 to 2, **characterised in that** the one restrictor (28) has a changeable cross-section, and that a second restrictor (38) in the second tank connection (T2) is arranged with a pre-set cross-section.

4. The valve according to any of Claims 1 to 3, **char-**

**acterised in that** all of the tank connections (T1, T2) discharge into a common tank connection (TA).

5. The valve according to any of Claims 1 to 4, **characterised in that** there is operated within the valve piston (12) a pressure reporting piston (42) which is supported by its one free end on the valve housing (10) and can be subjected to fluid pressure with its other free end by means of the pump connection (P).

6. The valve according to any of Claims 1 to 5, **characterised in that** there is disposed between the valve housing (10) and the valve piston (12) a power storage element acting in the direction of a fully open position of the first restrictor (28), in particular in the form of a compression spring (18).

7. The valve according to any of Claims 1 to 6, **characterised in that** for a fluid-conveying connection between the pump connection (P) and the first tank connection (T1) at least one connection channel (46) extends along the valve piston (12).

8. The valve according to any of Claims 1 to 7, **characterised in that** there is within the valve housing (10) between the first tank connection (T1) and an actuation chamber (48) for the valve piston (12) a pressure equalisation connection (50).


**Revendications**

1. Soupape, notamment soupape de régulation de la pression, comprenant un corps (10) de soupape ayant au moins un raccord (20) de pompe et un premier ainsi qu'un deuxième raccords (T1, T2) de cuve, corps dans lequel est guidé un piston (12) de soupape pouvant être commandé, notamment par un système (14) magnétique, et qui est pourvu d'un dispositif (20) hydraulique d'amortissement et d'une chambre (22) d'amortissement, dans laquelle l'intérieur de la chambre (22) d'amortissement peut communiquer avec le premier raccord (T1) de cuve au moyen d'un étranglement (28), dans laquelle des parties de l'étranglement (28) traversent le piston (12) de la soupape à la manière d'au moins un trou, la section transversale libre de l'étranglement (28) diminuant dans le piston (12) de la soupape au fur et à mesure qu'augmente le trajet de déplacement du piston (12) de la soupape en direction du deuxième raccord (T2) de cuve, la paroi de délimitation d'un trou, pour les parties (30) de la soupape (28) s'étendant à l'intérieur du piston (12) de la soupape, formant un bord (32) de réglage de l'étranglement (28), **caractérisée en ce que** la paroi de délimitation d'un trou pour le premier raccord (T1) de cuve forme un autre bord (34) de réglage de l'étranglement (28).

2. Soupape suivant la revendication 1, **caractérisée en ce que** le piston (12) de la soupape est pourvu, du côté de la périphérie extérieure, d'une rainure (36) annulaire dans laquelle les parties de la soupape (28) débouchent à la manière du trou (30) respectif et **en ce que** le côté de la rainure (36) annulaire tourné vers le premier raccord (T1) de cuve est l'un des bords (34) de réglage.

3. Soupape suivant l'une des revendications 1 à 2, **caractérisée en ce que** le un étranglement dispose d'une section transversale variable et un deuxième étranglement (38) est disposé dans le deuxième raccord (T2) de cuve en ayant une section transversale prescrite.

4. Soupape suivant l'une des revendications 1 à 3, **caractérisée en ce que** tous les raccords (T1, T2) de cuve débouchent dans un raccord (TA) de cuve commun.

5. Soupape suivant la revendication 4, **caractérisée en ce qu'**à l'intérieur du piston (12) de la soupape est guidé un piston (42) indicateur de pression, qui s'appuie, par l'une de ses extrémités libres, sur le corps (10) de la soupape et, par son autre extrémité libre, peut être soumis à une pression de fluide par le raccord (P) de pompe.

6. Soupape suivant l'une des revendications 1 à 5, **caractérisée en ce qu'**un élément accumulateur de force, notamment sous la forme d'un ressort (18) de compression, agissant en direction d'une position complètement ouverte du premier étranglement (28) est monté entre le corps (10) de la soupape et le piston (12) de la soupape.

7. Soupape suivant l'une des revendications 1 à 6, **caractérisée en ce que**, pour avoir une liaison fluidique entre le raccord (p) de pompe et le premier raccord (T1) de cuve, au moins un canal (46) de liaison s'étend le long du piston (12) de la soupape.

8. Soupape suivant l'une des revendications 1 à 7, **caractérisée en ce qu'**une liaison (50) de compensation de la pression est constituée à l'intérieur du corps (10) de la soupape entre le premier raccord (T1) de cuve et une chambre (48) d'actionnement du piston (12) de la soupape.

Fig.

**IN DER BESCHREIBUNG AUFGEFÜHRTE DOKUMENTE**

**In der Beschreibung aufgeführte Patentdokumente**

- DE OS1803018 A
- DE 19949234 A1
- US 2672882 A
- US 5509448 A